# EUROPÄISCHE PATENTSCHRIFT

(11) **EP 0 859 536 B1**
(45) Veröffentlichungstag und Bekanntmachung des Hinweises auf die Patenterteilung: **19.01.2005**
(21) Anmeldenummer: 97102460.9
(22) Anmeldetag: 15.02.1997
(51) Int. Cl.: H05B 3/26, G01J 3/10, H05B 3/14

(54) **Infrarot-Strahler und dessen Verwendung**
Infrared radiator and its application
Radiateur infra-rouge et son application

(43) Veröffentlichungstag der Anmeldung: 19.08.1998
(73) Patentinhaber: Siemens Building Technologies AG, 8034 Zürich (CH)
(72) Erfinder: Weber, Michel, 2525 Le Landeron (CH); Forster, Martin Dr., 8645 Jona (CH); Bögli, Urs, 8133 Esslingen (CH); Philippe, Renaud, Dr., 1028 Preverenges (CH); Bachmann, Philipp, 8127 Forch (CH); Ryser, Peter, Dr., 8712 Stäfa (CH)
(74) Vertreter: Berg, Peter, Dipl.-Ing.

(56) Entgegenhaltungen:
- EP-A- 0 177 724
- EP-A- 0 301 290
- EP-A- 0 368 080
- WO-A-97/04623
- US-A- 3 694 624
- US-A- 4 922 116
- PATENT ABSTRACTS OF JAPAN vol. 095, no. 002, 31.März 1995 & JP 06 307929 A (SHIMADZU CORP), 4.November 1994,

## Beschreibung

Die Erfindung betrifft einen Infrarot-Strahler aus einem Metal-Black sowie dessen Verwendung in Gassensoren.

Schwarze Strahler oder Plancksche Strahler sind allgemein aus der Physik bekannt. Sie zeichnen sich dadurch aus, dass ihre Absorption gleich ihrer Emissivität ist, falls sie sich in thermischem Gleichgewicht befinden. Ein guter Absorber ist also auch ein guter Emitter und je höher die Absorption eines Strahlermaterials, desto höher ist auch die Emissivität desselben. Gemäss Planck ist das emittierte Spektrum durch die Temperatur des Strahlers bestimmt, und das Maximum des Spektrums verschiebt sich bei Erwärmung oder Erhitzung des Strahlers in Richtung der kürzeren Wellenlängen. Für eine Strahlung im Infrarotbereich von 1-10 Mikrometern beträgt die Schwarzstrahlertemperatur beispielsweise einige hundert Kelvin.

In der Praxis sind uns viele verschiedene Arten von schwarzen Strahlern bekannt. Für den infraroten und sichtbaren Strahlungsbereich reicht die Vielfalt beispielsweise von grossen Geräten für Laborzwecke bis zu Nernst-Strahlern und Glühlampen aller Art. Unter den Glühlampen sind Miniaturlampen bekannt, die insbesondere in kleinen Geräten und Sensoren Anwendung finden. Hier werden vielfach Lampen mit Wolframdrähten eingesetzt. Sie funktionieren über längere Zeit nur im Vakuum, benötigen also eine Glasbirne, welche bei Wellenlängen grösser als 5 Mikrometer nicht mehr transparent ist. Solche Lampen sind als Infrarotquellen grösstenteils ungeeignet. Für Miniaturstrahler werden zum Beispiel auch Widerstände verwendet; diese besitzen aber für viele Zwecke eine zu hohe Wärmekapazität, sodass sie für einen modulierten Betrieb zu träge sind.

Metal-Black, wie zum Beispiel Platinschwarz, Goldschwarz, Nickelschwarz oder Chromschwarz, ist als guter Absorber bekannt. Dieses Material besteht aus einer Vielzahl von Metallpartikeln, die gleich einem Schwamm lose zusammenhängen oder sogenannt kolloidal verteilt sind. Die einzelnen Partikel sind von submikroskopischer Grösse und besitzen typischerweise einen Durchmesser von 2 bis 20 Nanometern. Die lose Verteilung der Metallpartikel ergibt, dass die totale Oberfläche pro Volumeneinheit oder die spezifische Oberfläche, des Metal-Black sehr gross ist. Auf das Metal-Black einfallende optische Strahlung wird vielmals an den Oberflächen der einzelnen Partikel reflektiert und absorbiert, bevor sie wieder aus dem Material in den freien Raum austritt. Durch die mehrfache Absorption besitzt sie dann nur einen sehr kleinen Anteil ihrer ursprünglichen Energie. Die Strahlung "verliert sich" also in dem Schwamm-gleichen Metall. Je mehr absorbierende Oberflächen das Material besitzt, desto höher ist sein Absorptionsvermögen. Die spezifische Oberfläche gilt also als Mass für die Absorption des Materials. Die spezifische Oberfläche eines Platinschwarz beträgt beispielsweise 30 Quadratmeter pro Gramm, wobei es 90 bis 95 % der einfallenden Strahlung absorbiert.

Platinschwarz lässt sich in Form einer dünnen Schicht durch elektrochemisches Abscheiden auf eine elektrisch leitende Fläche, zum Beispiel aus Platin oder einer Platinlegierung, aufbringen. Eine solche Platinschwarzschicht wirkt als guter Infrarot-Absorber und -emitter mit einer Absorption bei Raumtemperatur von mehr als 90 % im Wellenlängenbereich von 2 bis 20 Mikrometern. Bei der Erwärmung der Platinfläche, um Strahlung aus dem Platinschwarz im Bereich von 2 bis 20 Mikrometern zu erzielen, wird dieses thermodynamisch instabil. Die Erwärmung bewirkt ein Wandern und Zusammensintern der einzelnen Platinpartikel und somit eine Verkleinerung der spezifischen Oberfläche des Platinschwarz. Zum Beispiel hat eine Erwärmung auf 260°C während 40 Minuten eine Reduzierung der spezifischen Oberfläche auf die Hälfte zur Folge (Khassan et al., Russian Journal of Physical Chemistry 42 (10), 1968, p. 1324). Ähnliche Reduktionen der spezifischen Oberfläche sind auch bei Nickelschwarz und Chromschwarz festgestellt worden (Fan et al., Applied Physics Letters 29 (8), 1976, p. 478). Eine Erwärmung eines Metal-Black bewirkt also ein rasches Absinken seines Absorptionssowie des Emissionsvermögens, sodass sich Metal-Black in dieser Form als Infrarotstrahler über längere Zeit nicht eignet.

Aus der US-A-4 922 116 ist ein Infrarot-Strahler auf der Basis von Gold-Black mit einer Schutzschicht aus SiO₂ bekannt. Da diese Schutzschicht im Wellenlängenbereich von 3 bis 10 Mikrometern absorbiert, wird die Emission des unter der Schutzschicht befindlichen Gold-Black abgeschwächt. Aus der JP-A-06 307 929 ist ein Infrarot-Detektor bekannt, die dem von einer Schutzschicht überzogenes Gold-Black als Absorber verwendet wird.

Hieraus stellt sich die Aufgabe dieser Erfindung, einen Infrarot-Strahler auf Basis eines Metal-Black zu realisieren, der bei Erwärmung über längere Zeit sein Absorptions- und Emissionsvermögen beibehält. Der Infrarot-Strahler soll hierfür thermodynamisch und chemisch stabil sein, also gegen Hitze und Oxidation beständig sein. Der Infrarot-Strahler soll ausserdem in Form von einer oder mehreren dünnen Schichten auf der gesamten Fläche eines Wafers herstellbar sein, der durch Sägen in eine Vielzahl einzelner Infrarot-Strahler kleinerer Fläche zerlegbar ist.

Die Erfindung betrifft einen Infrarot-Strahler mit einer Heizung und einer aus kolloidal verteilten Metallpartikeln bestehenden Schicht aus Metal-Black, welches eine thermisch stabile Schutzschicht aufweist, welche das Metal-Black bedeckt.

Der erfindungsgemässe Infrarot-Strahler ist dadurch gekennzeichnet, dass das Metal-Black durch Platin-Black gebildet ist, und dass die Schutzschicht Aluminiumdioxid enthält.

Das Platin-Black hat sehr gute Emissionseigenschaften und kann auf einfache Weise elektrolytisch hergestellt werden. Die Schutzschicht aus Aluminiumdioxid bewirkt, dass auch bei Erwärmung des Infrarot-Strahlers die Absorption und Emission des Strahlers über längere Zeit aufrecht erhalten bleibt. Die Schutzschicht ist insbesondere hitzebeständig und in Wasser sowie in verdünnten Säuren und Basen unlöslich. Sie ist für die emittierte Strahlung grösstenteils transparent, schützt die Metallpartikel vor Oxidation und vermindert bei Erhitzung ein Zusammensintern der Metallpartikel.

Eine bevorzugte Ausführungsform des erfindungsgemässen Infrarot-Strahlers ist dadurch gekennzeichnet, dass die Schutzschicht eine Dicke zwischen 10 Nanometem und 10 Mikrometern aufweist.

Eine Schutzschicht von der minimalen Dicke von 10 nm gewährt den notwendigen Schutz vor Hitze, Zusammensintern und Oxidation bei einer Erwärmung auf 800°C über mehrere Tage. Bei der Verwendung des Infrarot-Strahlers als modulierte Lichtquelle wird bei der Wahl der Dicke der Schutzschicht auch ihre thermische Masse in Betracht gezogen. Sie wird insbesondere so gewählt, dass der Strahler auf die Modulation nicht träge reagiert und ein genügend gutes Modulationssignal erzielt wird. Ein Infrarot-Strahler mit einer Schutzschicht von 0.2 Mikrometer erlaubt beispielsweise eine Modulation der Heizung bis zu 30 Hz mit einer resultierenden Modulationstiefe von 90 %. Die Dicke der Schutzschicht wird ferner in Abstimmung mit der gewünschten Transparenz der Schutzschicht im Spektralbereich der emittierten Strahlung gewählt; je dünner die Schutzschicht je höher die Transparenz.

Drei verschiedene Ausführungen des Infrarot-Strahlers und eine Verwendung davon sind anhand der folgenden Figuren erläutert.

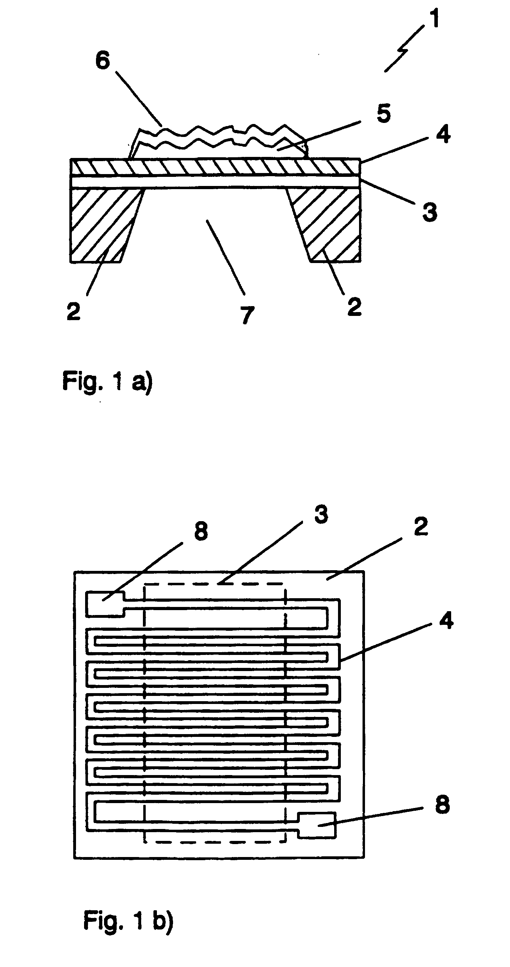

Figur 1 a) zeigt stark vergrössert einen Querschnitt durch eine erste Ausführung des erfindungsgemässen Infrarot-Strahlers realisiert auf einem Silizium-Wafer.
Figur 1 b) zeigt in einer Draufsicht die Heizung für den Infrarot-Strahler.
Figuren 2 a) und b) zeigen die erste Ausführung des erfindungsgemässen Infrarot-Strahlers realisiert auf einem Standard-Header.
Figuren 3 a) und b) zeigen vergrössert eine zweite Ausführung des Infrarot-Strahlers realisiert auf einer Kunststoffolie.
Figur 4 zeigt den erfindungsgemässen Infrarot-Strahler in Verwendung in einem optoakustischen Gassensor.

Der Infrarot-Strahler 1 in Figur 1 a) ist monolithisch aufgebaut und weist ein Stück eines Silizium-Wafers 2, eine Membran 3, eine Heizung 4 und eine Schicht aus Metal-Black 5 mit einer Schutzschicht 6 auf. Auf der oberen Oberfläche des Silizium-Wafers 2 ist eine dünne Schicht 3 aus beispielsweise Si₃N₄ oder SiOₓN_{y} angeordnet. Der Silizium-Wafer 2 ist von seiner unteren Seite her bis zur dünnen Schicht 3 selektiv unterätzt. Das Silizium-Wafer besitzt also eine Öffnung 7, über der die dünne Schicht 3 gleich einer Membran 3 liegt. Auf der Membran 3 ist eine Heizung 4 angeordnet. Die Heizung 4 in Figur 1 b) besteht beispielsweise aus einem dünnschichtigen Mäander aus Platin, das mittels Aufdampfen und einer Maske auf die dünne Schicht 3 aufgebracht worden ist. Die Membran 3 ist mit gestrichelter Linie angedeutet. An beiden Enden des Mäanders befinden sich Kontaktelektroden 8 zum Anlegen einer Heizspannung. Die Breite der einzelnen Bahnen des Mäanders sind jeweils so gewählt, dass beim Anlegen der Heizspannung eine gewünschte Temperatur des Platins erzielt wird. Hierzu sind sie möglichst schmal und möglichst dicht beieinander angeordnet, um eine regelmässige Erwärmung der ganzen Fläche des Strahlers zu erzielen. Das Mäander der Heizung 4 ragt jeweils über die Fläche der mit gestrichelter Linie angedeuteten Membran 3 hinaus, sodass ein Teil des Mäanders über dem Silizium-Wafer 2 liegt. Im Fall eines modulierten Heizbetriebs bezweckt diese Anordnung eine rasche Abkühlung zwischen den Spannungspulsen und eine gute Modulationstiefe der emittierten Strahlung. Auf der Heizschicht 4 liegt eine Schicht 5 aus Metal-Black mit einer Schutzschicht 6, die erhitzt auf eine Temperatur auf 300°C Strahlung emittiert, deren Maximum bei 4.3 Mikrometern Wellenlänge liegt. Wird die Heizschicht 4 auf 800°C erwärmt, so liegt das Maximum der emittierten Strahlung bei 2.7 Mikrometern Wellenlänge.

Diese Ausführung des Infrarot-Strahlers eignet sich insbesondere für Verwendungen in kleinen Systemen. Die Dimensionen des Strahlers sind beispielsweise 6 x 6 mm², wobei sie aber auch nur bis zu 0.5 x 0.5 mm² sein können. Der monolithische Aufbau des Strahlers erlaubt eine Integration in Systemen mit ähnlichem monolithischem Aufbau wie zum Beispiel optische Sensoren für Medizin, Chemie usw. Der Infrarot-Strahler ist in dieser Ausführung in einer Batch-Herstellung mittels Masken in einer Vielzahl auf einem Wafer herstellbar, der nach Fertigstellung in einzelne Strahler zersägt wird.

Die Schutzschicht 6 wird durch verschiedene Methoden der Dünnschichttechnik auf das Metal-Black aufgebracht. Für das Aufbringen von Al₂O₃ und SiO₂ eignen sich das thermische Aufdampfen und chemical vapor deposition am besten, wobei für andere Materialien Sputtern unter Vakuum sowie das Abscheiden aus einer Lösung auch in Frage kommen.

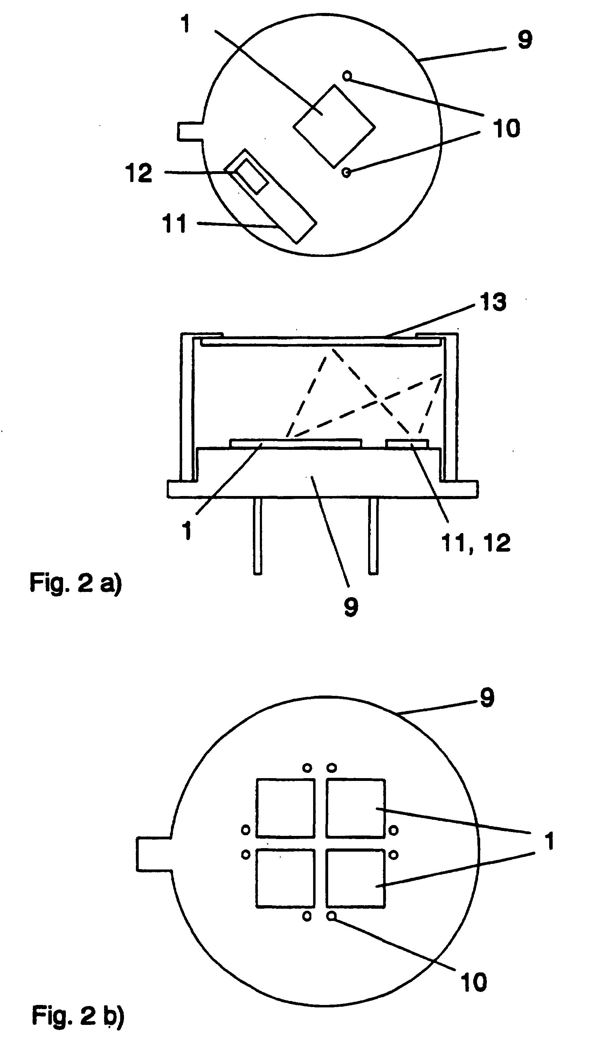

In Figur 2 a) ist ein einziger Infrarot-Strahler 1 der ersten Ausführung in Figur 1 auf einem Standard-Header 9 mit Elektroden 10 zum Anlegen der Heizspannung montiert. Neben dem Strahler 1 sind ein Pyrosensor 11 und eine Verstärkerschaltung 12 mit einem JFET und einem Hoch-Ohm-Widerstand angeordnet. Der Pyrosensor 11 dient der Kontrollmessung der abgegebenen Infrarot-Strahlung. Ein Teil der abgegebenen Strahlung wird an den Innenwänden und dem Fenster 13 des Headergehäuses diffus gestreut, wovon wiederum ein Teil auf den Pyrosensor 11 fällt. Das vom Pyrosensor erzeugte und verstärkte Signal gibt sodann einen Relativwert der gesamten Strahlung an. Das Fenster 13 besteht aus einem breitbandig infrarottransparenten Material, wie Glas oder Silizium, oder aus einem schmalbandigen Infrarot-Filter, wie zum Beispiel einem bei einer vorgegebenen Wellenlänge transparenten Bandpassfilter oder einem elektrisch gesteuerten variablen Bandpassfilter.

In Figur 2 b) sind vier dieser Infrarot-Strahler 1 auf dem gleichen Header 9 montiert. Diese Ausführung ermöglicht einerseits eine stärkere Strahlung, andererseits Strahlung bei mehreren verschiedenen Modulationsfrequenzen, sodass in der Anwendung in einem Messgerät mehrere voneinander unabhängige Messungen gleichzeitig durchgeführt werden können.

In einer alternativen Ausführung wird der Infrarot-Strahler 1 auf einem Dickfilmsubstrat aus Aluminiumoxid oder sonstiger Keramik montiert und mittels externen Anschlusssbeinchen mit der Heizspannung kontaktiert.

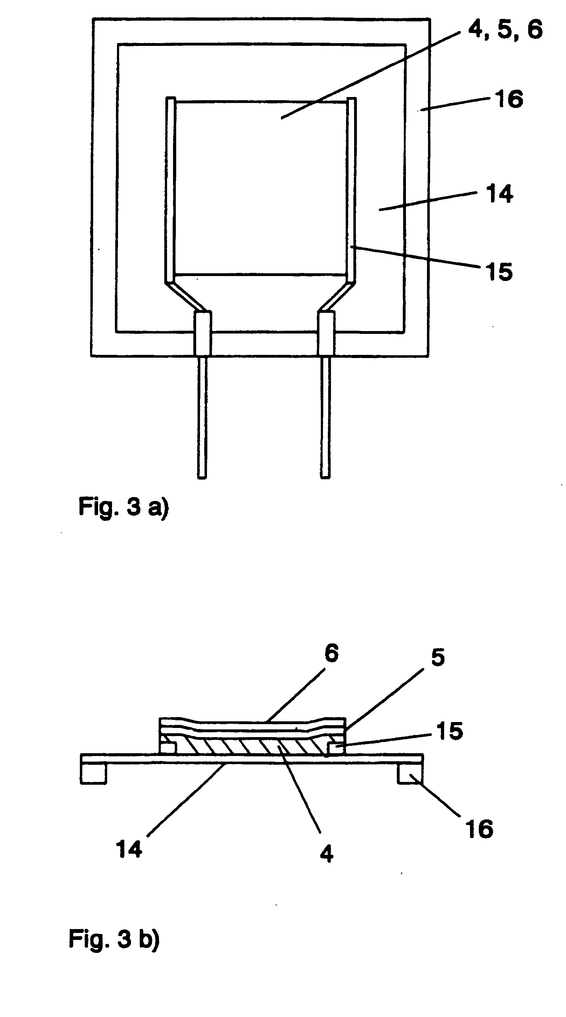

Figur 3 a) zeigt eine zweite Ausführung des Infrarot-Strahlers 1 in Draufsicht. Sie ist der in Figur 1 ähnlich, weist aber anstelle eines Silizium-Wafers eine Folie 14 auf bestehend aus Kapton, einem Polymid, oder einem anderen temperaturbeständigen Kunststoff. Auf der Folie 14 liegt eine Heizschicht 4, die mittels Siebdruck und einer elektrisch leitenden Paste auf die Folie 14 aufgetragen worden ist. Die Heizschicht ist in diesem Fall eine zusammenhängende Fläche. Auf der Heizung 4 ist eine durch elektrochemisches Abscheiden aufgetragene Schicht Metal-Black 5 mit der Schutzschicht 6 angeordnet.

Figur 3 b) zeigt den Strahler im Querschnitt mit Kontaktelektroden 15 zum Anlegen einer Spannung an der Heizung 4. Am Rand der Folie 14 ist ein Rahmen 16 angeordnet, durch den die Kontaktelektroden 15 an der Folie 14 befestigt sind. Diese Ausführung des Strahlers eignet sich besonders für Strahler grösserer Fläche. Seine Dimensionen betragen beispielsweise 10 x 10 mm², können aber bis zu einem Mehrfachen dieser Grösse sein.

Infrarot-Strahler dieser Art können als optische Quellen allein oder in optischen Geräten wie Sensoren, Analysegeräten und in der Spektroskopie verwendet werden. Eine spezielle Verwendung des Strahlers liegt auf dem Gebiet der optoakustischen Gassensoren. Diese bestehen im wesentlichen aus einer Gasmesszelle, einem Mikrofon und einer optischen Quelle. Diese sendet pulsweise Licht von der Wellenlänge in die Messzelle, die von dem zu detektierenden Gas absorbiert wird. Befindet sich Gas in der Messzelle, absorbiert es die einfallende Strahlung, erwärmt sich und dehnt sich infolgedessen aus. Die durch diese Ausdehnung bewirkte Druckschwankung in der Messzelle wird durch das Mikrofon empfangen und von einer Auswerteschaltung ausgewertet. In bekannten optoakustischen Gassensoren besteht die optische Lichtquelle aus einer Glühbirne und einem optischen Bandpassfilter. In vielen Fällen wird angestrebt, den Gassensor so klein wie möglich zu realisieren. Es ist beispielsweise ein Gassensor von der WO 96/24831 bekannt, der aus Silizium-Wafern aufgebaut ist. Bei diesem Sensor würde eine Glühbirne als Lichtquelle wesentlich grösser sein als der Sensor selbst. Gemäss dieser Erfindung wird der Infrarot-Strahler in einem optoakustischen Gassensor auf Waferbasis verwendet.

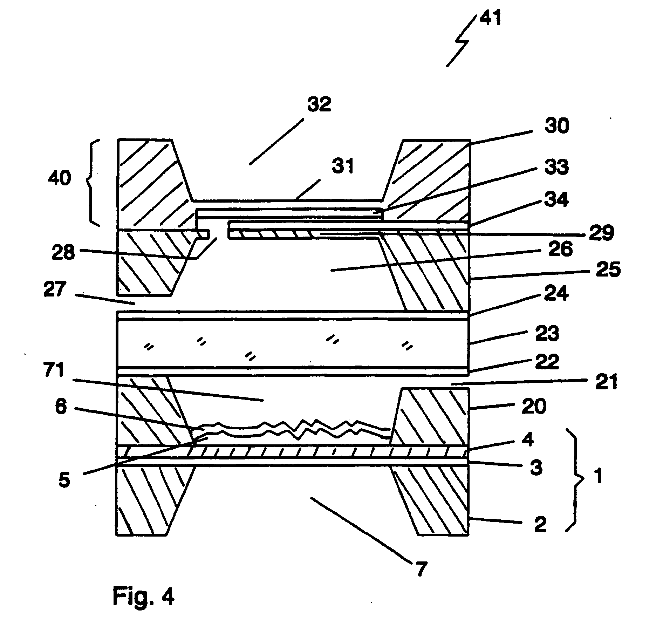

Die Figur 4 zeigt einen monolithischen Aufbau eines optoakustischen Gassensors (41) mit integriertem erfindungsgemässen Infrarot-Strahler. Er weist einen Infrarot-Strahler 1 gleich dem in Figur 1 auf mit einem Stück eines Silizium-Wafers 2 und einer Membran 3, auf der die Heizung 4 und das Metal-Black 5 mit Schutzschicht 6 angeordnet sind. Auf dem Infrarot-Strahler 1 ist ein Silizium-Wafer 20 als Abstandhalter angeordnet, der in seiner Mitte eine Öffnung 71, ein freies Volumen 71 besitzt, die mittels Durchätzen herbeigeführt worden ist. Das strahlende Metal-Black 5 mit Schutzschicht 6 liegt in dieser Öffnung umschlossen vom Silizium-Wafer 20. Auf der einen Seite des Silizium-Wafers 20 ist eine dünne Schicht Silizium weggeätzt, wodurch beim weiteren Aufbau des Sensors eine Öffnung 21 gebildet wird. Auf dem Silizium-Wafer 20 ist ein optisches Bandpassfilter angeordnet, das aus einem ersten Filter 22, einem Filtersubstrat 23 und einem zweiten Filter 24 besteht, wobei die Filter 22 und 24 mehrere Dünnschichten enthalten. Die Öffnung 21 zu dem freien Volumen 71 über dem Infrarotstrahler 1 dient zum Druckausgleich, da sonst ein Druckaufbau in dem Volumen 71 die Verbindungen zwischen dem optischen Bandpassfilter und dem Silizium-Wafer 20 belasten würde. Auf dem zweiten Filter 24 des optischen Bandpassfilters sind die Messzelle und das Mikrofon des optoakustischen Gassensors angeordnet. Die Messzelle besteht aus einem Silizium-Wafer 25 ähnlich den Wafern 2 und 20. Der Wafer 25 ist teilweise unterätzt, sodass er ein freies Volumen, die Gasmesszelle 26, bildet, das von dem Filter 24 und einer dünnen, bei der Unterätzung übrig gebliebenen Siliziumschicht 29 begrenzt ist. Der Silizium-Wafer 25 weist zwei Öffnungen 27 und 28 auf. Die erste Öffnung 27 dient dem Einlass von Gasen in die Gasmesszelle 26. Die zweite Öffnung 28 führt zum Mikrofon 40 bestehend aus einer stationären und einer beweglichen Elektrode, die auf einem weiteren Silizium-Wafer angeordnet sind. Das Mikrofon 40 ist aus dem Silizium-Wafer 30 aufgebaut, der gleich dem Wafer 2 eine dünne Schicht 31, beispielsweise aus Siliziumnitrid, aufweist. Durch Unterätzung des Siliziums bis zur Schicht 31 wurde ein freies Volumen 32 gebildet, das durch die dünne, Membran-gleiche Schicht 31 begrenzt ist. Auf der Schicht 31 ist die bewegliche Elektrode 33 des Mikrofons angeordnet. Von der beweglichen Elektrode 33 durch einen schmalen Spalt beabstandet liegt schliesslich die stationäre Elektrode 34 des Mikrofons 40. Durch diesen monolithischen Aufbau lässt sich in jedem Herstellungsdurchgang in einer Batch-Fabrikation eine grosse Anzahl optoakustischer Gassensoren dieser Art herstellen. Hierzu werden die Bestandteile Infrarot-Strahler 1, Abstandhalter 20, optisches Bandpassfilter 22-24, Messzelle 26 und das Mikrofon 40 zuerst in einer Vielzahl auf einem Wafer hergestellt, zusammengeklebt und schliesslich in einzelne Gassensoren zersägt.

Eine zweite Verwendung des Infrarot-Strahlers ist im Gebiet der Gassensoren nach dem Durchlichtprinzip. Diese weisen eine Infrarotquelle, ein Infrarot-Filter, eine Gasmesszelle und einen Detektor auf, der die Intensitätsveränderungen aufgrund von Absorptionen durch das Gas in der Messzelle misst. Der erfindungsgemässe Infrarot-Strahler ist durch seine kleine Grösse insbesondere geeignet.

Eine weitere Verwendung des Infrarot-Strahlers liegt auf dem Gebiet der sichtbaren Glühlampen im Vakuum. Um eine Strahlung im sichtbaren Bereich zu erreichen wird das Strahlermaterial auf eine höhere Temperatur erhitzt und als Schutzschicht auf dem Metal-Black ein Material mit höherem Schmelzpunkt verwendet. Hierzu eignet sich beispielsweise TiC mit einem Schmelzpunkt von 3067°C. Für das Metal-Black in dieser Anwendung sind Materialien wie beispielsweise Titan, Zirkon, Hafnium, Vanadium, Tantal, Niob, Chrom, Nickel, Molybdän, Wolfram, Rhenium oder Mischungen dieser Materialien geeignet. Mit diesen Materialien werden Emissionen im Wellenlängenbereich von 0.3 bis 5 Mikrometern erreicht.

## Patentansprüche

1. Infrarot-Strahler (1) mit einer Heizung (4) und einer aus kolloidal verteilten Metallpartikeln bestehenden Schicht aus einem Metal-Black (5), welches eine thermisch stabile Schutzschicht (6) aufweist, welche die Metallpartikel des Metal-Black (5) bedeckt, **dadurch gekennzeichnet, dass** das Metal-Black (5) durch Platin-Black gebildet ist, und dass die Schutzschicht (6) Aluminiumoxid enthält.

2. Infrarot-Strahler (1) nach Anspruch1, **dadurch gekennzeichnet, dass** die Schutzschicht (6) eine Dicke zwischen 10 Nanometem und 10 Mikrometern aufweist.

3. Infrarot-Strahler (1) nach Anspruch 2, **dadurch gekennzeichnet, dass** der Infrarot-Strahler (1) monolithisch aufgebaut ist, indem die Heizung (4) des Infrarot-Strahlers (1) als dünne Schicht (4) auf einer über einer Öffnung (7) eines unterätzten Silizium-Wafers (2) liegenden Membran (3) angeordnet ist und das Platin-Black (5) mit der Schutzschicht (6) auf der Heizung (4) liegt.

4. Infrarot-Strahler (1) nach Anspruch 3, **dadurch gekennzeichnet, dass** mindestens ein Infrarot-Strahler (1) auf einem Standard-Header (9) oder auf einem Dickfilmsubstrat montiert ist.

5. Infrarot-Strahler (1) nach Anspruch 4, **dadurch gekennzeichnet, dass** neben dem Infrarot-Strahler (1) ein Pyrosensor (11) mit einer Verstärkerschaltung (12) zur Messung eines Teils der emittierten Strahlung angeordnet ist.

6. Infrarot-Strahler (1) nach Anspruch 4 oder 5, **dadurch gekennzeichnet, dass** über dem Standard-Header (9) oder dem Dickfilmsubstrat ein Fenster (13) angeordnet ist, das aus einem Bandpassfilter oder einem variablen Bandpassfilter besteht.

7. Infrarot-Strahler (1) nach Anspruch 2, **dadurch gekennzeichnet, dass** der Infrarot-Strahler (1) auf einer Folie (14) aus einem temperaturbeständigen Kunststoff angeordnet ist.

8. Infrarot-Strahler (1) nach Anspruch 7, **dadurch gekennzeichnet, dass** neben dem Infrarot-Strahler (1) ein Pyrosensor (11) mit einer Verstärkerschaltung (12) zur Messung eines Teils der emittierten Strahlung angeordnet ist.

9. Infrarot-Strahler (1) nach einem der Ansprüche 3-8, **dadurch gekennzeichnet, dass** die Schutzschicht (6) beständig gegen Oxidation, Wasser und verdünnte Säuren und Basen ist.

10. Infrarot-Strahler (1) nach einem der Ansprüche 2-9, **dadurch gekennzeichnet, dass** die Heizung (4) aus einer Platinlegierung besteht.

11. Infrarot-Strahler (1) nach einem der Ansprüche 2-10, **dadurch gekennzeichnet, dass** die Heizung (4) in der Form eines Mäanders ausgelegt ist, das Mäander über die Breite der Öffnung (7) hinausreicht und dessen Bögen über dem Silizium-Wafer (2) liegen.

12. Verfahren zur Herstellung eines Infrarot-Strahlers (1) nach Anspruch 2, **dadurch gekennzeichnet, dass** die Schutzschicht (6) durch thermisches Aufdampfen, Sputtern, chemical vapor deposition oder chemisches Abscheiden aus einer Lösung auf das Metal-Black (5) aufgebracht wird.

13. Verwendung eines Infrarot-Strahlers (1) nach einem der Ansprüche 2-11 in einem Gassensor nach dem Durchlichtprinzip.

14. Verwendung eines Infrarot-Strahlers (1) nach einem der Ansprüche 2-11 in einem optoakustischen Gassensor.

15. Verwendung eines Infrarot-Strahlers (1) nach Anspruch 14, **dadurch gekennzeichnet, dass** der optoakustische Gassensor monolithisch aus Silizium-Wafern aufgebaut ist.

16. Verwendung eines Infrarot-Strahlers (1) nach einem der Ansprüche 2-11 als Glühlampe im Wellenlängenbereich von 0.3 bis 5 Mikrometern.

17. Optoakustischer Gassensor (41) mit einer infraroten Lichtquelle, einer Gasmesszelle (26) und einem Mikrofon (40), die aus geätzten Silizium-Wafern (24, 30) gebildet sind und monolithisch mit einem optischen Bandpassfilter (22-24) vereint sind, **dadurch gekennzeichnet, dass** die infrarote Lichtquelle aus einem Infrarot-Strahler (1) besteht, der eine Heizung (4) und eine Schicht eines aus kolloidal verteilten Platinpartikeln bestehenden Platin-Black (5) mit einer Schutzschicht (6) aufweist, welche die einzelnen Platinpartikel bedeckt und Aluminiumoxid enthält.

## Claims

1. Infrared radiator (1) with a heater (4) and a metal black layer (5) which comprises colloidally distributed metal particles and has a thermally stable protective layer (6), which covers the metal particles of the metal black (5), **characterized in that** the metal black (5) is formed by platinum black, and **in that** the protective layer (6) contains aluminium oxide.

2. Infrared radiator (1) according to Claim 1, **characterized in that** the protective layer (6) has a thickness of between .10 nanometres and 10 micrometres.

3. Infrared radiator (1) according to Claim 2, **characterized in that** the infrared radiator (1) is monolithically constructed, **in that** the heater (4) of the infrared radiator (1) is arranged as a thin layer (4) on a membrane (3) lying over an opening (7) in an undercut silicon wafer (2) and the platinum black (5) with the protective layer (6) lies on the heater (4).

4. Infrared radiator (1) according to Claim 3, **characterized in that** at least one infrared radiator (1) is mounted on a standard header (9) or on a thick-film substrate.

5. Infrared radiator (1) according to Claim 4, **characterized in that**, along with the infrared radiator (1), a pyro sensor (11) with an amplifier circuit (12) is arranged for measuring part of the emitted radiation.

6. Infrared radiator (1) according to Claim 4 or 5, **characterized in that** a window (13) which comprises a bandpass filter or variable bandpass filter is arranged over the standard header (9) or the thick-film substrate.

7. Infrared radiator (1) according to Claim 2, **characterized in that** the infrared radiator (1) is arranged on a film (14) of a temperature-resistant plastic.

8. Infrared radiator (1) according to Claim 7, **characterized in that**, along with the infrared radiator (1), a pyro sensor (11) with an amplifier circuit (12) is arranged for measuring part of the emitted radiation.

9. Infrared radiator (1) according to one of Claims 3-8, **characterized in that** the protective layer (6) is resistant to oxidation, water and dilute acids and alkalines.

10. Infrared radiator (1) according to one of Claims 2-9, **characterized in that** the heater (4) consists of a platinum alloy.

11. Infrared radiator (1) according to one of Claims 2-10, **characterized in that** the heater (4) is designed in the form of a meander, the meander reaches beyond the width of the opening (7) and its arcs lie over the silicon wafer (2).

12. Method for producing an infrared radiator (1) according to Claim 2, **characterized in that** the protective layer (6) is applied to the metal black (5) by thermal vapour deposition, sputtering, chemical vapour deposition or chemical deposition from a solution.

13. Use of an infrared radiator (1) according to one of Claims 2-11 in a gas sensor based on the transmitted light principle.

14. Use of an infrared radiator (1) according to one of Claims 2-11 in an optoacoustic gas sensor.

15. Use of an infrared radiator (1) according to Claim 14, **characterized in that** the optoacoustic gas sensor is monolithically constructed from silicon wafers.

16. Use of an infrared radiator (1) according to one of Claims 2-11 as an incandescent lamp in the wavelength range of from 0.3 to 5 micrometres.

17. Optoacoustic gas sensor (41) with an infrared light source, a gas measuring cell (26) and a microphone (40), which are formed from etched silicon wafers (24, 30) and are monolithically combined with an optical bandpass filter (22-24), **characterized in that** the infrared light source comprises an infrared radiator (1) which has a heater (4) and a platinum black layer (5) which comprises colloidally distributed platinum particles and has a protective layer (6), which covers the individual platinum particles and contains aluminium oxide.

## Revendications

1. Radiateur infrarouge (1) comprenant un chauffage (4) et une couche de noir de métal (5) composée de particules métalliques réparties de manière colloïdale, le noir de métal présentant une couche de protection (6) thermiquement stable qui recouvre les particules métalliques du noir de métal (5), **caractérisé en ce que** le noir de métal (5) est constitué de noir de platine et **en ce que** la couche de protection (6) contient de l'oxyde d'aluminium.

2. Radiateur infrarouge (1) selon la revendication 1, **caractérisé en ce que** la couche de protection (6) présente une épaisseur comprise entre 10 nanomètres et 10 micromètres.

3. Radiateur infrarouge (1 ) selon la revendication 2, **caractérisé en ce que** le radiateur infrarouge (1) est construit monolithiquement du fait que le chauffage (4) du radiateur infrarouge (1) est situé en tant que couche mince (4) sur une membrane (3) située au-dessus d'un orifice (7) d'une plaquette de silicium (2) gravée par le bas et que le noir de platine (5), avec la couche de protection (6), se trouve sur le chauffage (4).

4. Radiateur infrarouge (1) selon la revendication 3, **caractérisé en ce qu'**au moins un radiateur infrarouge (1) est monté sur un socle standard (9) ou sur un substrat à film épais.

5. Radiateur infrarouge (1) selon la revendication 4, **caractérisé en ce qu'**est situé, à côté du radiateur infrarouge (1), un pyrocapteur (11) avec un circuit d'amplification (12) pour mesurer une partie du rayonnement émis.

6. Radiateur infrarouge (1) selon la revendication 4 ou 5, **caractérisé en ce qu'**est située, au-dessus du socle standard (9) ou du substrat à film épais, une fenêtre qui se compose d'un filtre passe-bande ou d'un filtre passe-bande variable.

7. Radiateur infrarouge (1) selon la revendication 2, **caractérisé en ce que** le radiateur infrarouge (1) est situé sur une feuille (14) en matière synthétique résistant à la température.

8. Radiateur infrarouge (1) selon la revendication 7, **caractérisé en ce qu'**est situé, à côté du radiateur infrarouge (1), un pyrocapteur (11) avec un circuit d'amplification (12) pour mesurer une partie du rayonnement émis.

9. Radiateur infrarouge (1) selon l'une des revendications 3 à 8, **caractérisé en ce que** la couche de protection (6) est résistante à l'oxydation, à l'eau et aux acides et bases dilués.

10. Radiateur infrarouge (1) selon l'une des revendications 2 à 9, **caractérisé en ce que** le chauffage (4) se compose d'un alliage de platine.

11. Radiateur infrarouge (1) selon l'une des revendications 2 à 10, **caractérisé en ce que** le chauffage (4) est conçu sous la forme d'un serpentin, le serpentin va au-delà de la largeur de l'orifice (7) et ses coudes se trouvent au-dessus de la plaquette de silicium (2).

12. Procédé de fabrication d'un radiateur infrarouge (1) selon la revendication 2, **caractérisé en ce que** la couche de protection (6) est appliquée sur le noir de métal (5) par métallisation thermique, dépôt physique en phase vapeur (physical vapor deposition), dépôt chimique en phase vapeur (chemical vapor deposition) ou séparation chimique à partir d'une solution.

13. Utilisation d'un radiateur infrarouge (1) selon l'une des revendications 2 à 11 dans un capteur de gaz selon le principe de l'absorption de la lumière.

14. Utilisation d'un radiateur infrarouge (1) selon l'une des revendications 2 à 11 dans un capteur de gaz opto-acoustique.

15. Utilisation d'un radiateur infrarouge (1) selon la revendication 14, **caractérisée en ce que** le capteur de gaz opto-acoustique est construit monolithiquement à partir de plaquettes de silicium.

16. Utilisation d'un radiateur infrarouge (1 ) selon l'une des revendications 2 à 11 en tant que lampe à incandescence dans la plage de longueurs d'ondes allant de 0,3 à 5 micromètres.

17. Capteur de gaz opto-acoustique (41) comprenant une source de lumière infrarouge, une cellule de mesure de gaz (26) et un microphone (40), qui sont constitués à partir de plaquettes de silicium (24, 30) gravées et sont réunis de manière monolithique avec un filtre passe-bande optique (22-24), **caractérisé en ce que** la source de lumière infrarouge se compose d'un radiateur infrarouge (1) qui comporte un chauffage (4) et une couche de noir de platine (5) composée de particules de platine réparties de manière colloïdale, avec une couche de protection (6), laquelle recouvre les particules de platine distinctes et contient de l'oxyde d'aluminium.
